# EUROPEAN PATENT SPECIFICATION

(11) **EP 1 571 505 B1**
(45) Date of publication and mention of the grant of the patent: **08.05.2013**
(21) Application number: 04004946.2
(22) Date of filing: 03.03.2004
(51) Int. Cl.: G04B 37/04, A44C 5/02

(54) **Protective cover for watches and precious objects**
Schützende Abdeckung für Uhren und Schmuckgegenstände
Couvercle de protection pour montres et bijoux

(43) Date of publication of application: 07.09.2005
(73) Proprietor: Polykap S.R.L., 47899 Serravalle (SM)
(72) Inventor: Raimondi, Pierluigi, Dogana (SM)
(74) Representative: Provvisionato, Paolo

(56) References cited:
- CH-A- 206 869
- CH-A- 354 285
- DE-A- 4 112 679
- DE-C- 458 916
- FR-A- 1 264 684
- GB-A- 141 316
- GB-A- 242 019
- GB-A- 983 420
- GB-A- 2 252 183
- US-A- 2 553 089
- US-A- 2 584 270
- US-A- 4 837 756

## Description

The present invention relates to a protective cover for watches and precious objects.

Many luxury commodities with a very high economic value attract the interest of collectors and constitute a common form of investment.

These luxury commodities, however, usually end up in safes or safe-deposit boxes and are very rarely exhibited in public or, to put it more prosaically, they are hardly ever used.

Commodities of this kind include jewellery such as rings, bracelets, necklaces and brooches; precision instruments such as wristwatches, clocks, chronometers, chronographs; and other objects of this nature, whose special value is linked to the materials they are made of or to the artists who produce them.

It follows logically that the owners of luxury commodities have every interest in protecting them against damage, not only to avoid reducing their commercial value but also to safeguard their appearance and artistic value.

Less obvious is the number of risks to which commodities of this kind are exposed.

With reference in particular to wristwatches and similar precision instruments, the risk begins with transfer from the manufacturer to the seller, with the product divided into its separate parts (watch case, strap or bracelet, guarantee certificate) protected only by paper, blister packaging or polystyrene; then, during assembling, they are subject to minor shocks and surface scratches; lastly, once exposed or placed in a safe, they may suffer damage due to improper handling. Otherwise, shut away in boxes or other containers of various kinds, they disappear from view, which means that sellers must do without them as a sure means of attracting potential buyers and that owners are deprived of the legitimate pleasure of contemplating the *objets d'art* they have purchased.

Moreover, under certain circumstances, using these objects causes scratching and minor shocks: for example, wearing the objects while practising certain sports such as scuba diving, mountaineering or car racing, or while working outdoors or being otherwise exposed to bad weather conditions.

In the specific case of watches, the only known accessory capable of overcoming the above mentioned disadvantages at least partly is a cover applied to the top of the watch.

This traditional cover, however, protects only the edge of the watch case and is useful only under certain circumstances since it doesn't protect the entire watch case.

Prior art already knows document DE 4112679A wherein it is disclosed a cover for watches comprising an openable case equipped with closing means. The case is made by several pieces and comprises surface portions generically shaped. Said surface portions generally does not fully cover the surface of the watch. In other case they fully cover the surface of the watch, but owing to their generic shape they are not able to protect the object inside from damage due to knocking or scratching.

GB 2252183A discloses a protective cover for watches comprising an openable case.

The case is made by several pieces with surfaces generically shaped, which are not able to protect the object inside from damage due to knocking or scratching. Very often, valuable watches come with equally valuable straps or bracelets. In this case, the strap or bracelet runs the same risks as the watch: for example, scratches caused by sliding contract when the metal bracelet is folded and placed in an envelope together with the watch. The aim of the present invention is to overcome the above mentioned disadvantages.

This aim is achieved by a protective cover that completely protects the surface of valuable objects, especially watches and the like, against shocks and scratches.

The main advantage achieved by the present invention lies essentially in that fact that the cover provides total protection during transportation, display, safe keeping and use of the objects. Further, at least its top surface is made from a transparent material so that the watch or other valuable object inside is fully visible and can be appreciated in all its beauty.

Moreover, simple adaptations enable it to be applied to valuable objects such as watch straps or bracelets of many different kinds, whether attached to the watch case or separate from it.

Further advantages and characteristics of the invention are apparent from the detailed description which follows with reference to the accompanying drawings which illustrate a preferred, non-restricting embodiment of the invention and in which:
- Figure 1 shows a front view (1a), a side view (1b) and a top plan view (1c) of a preferred embodiment of the invention;
- Figure 2 shows views like those of Figure 1, illustrating the invention being used;
- Figure 3 illustrated the invention in a cross section through line III-III of Figure 1;
- Figure 4 shows perspective views of the invention from above (4a) and from below (4b).

As shown in the drawings, the invention relates to a total protective cover for watches and precious objects, comprising an openable case (1) equipped with closing means (2) and designed to fully cover the surface of the object and to protect it against damage due to knocking and scratching.

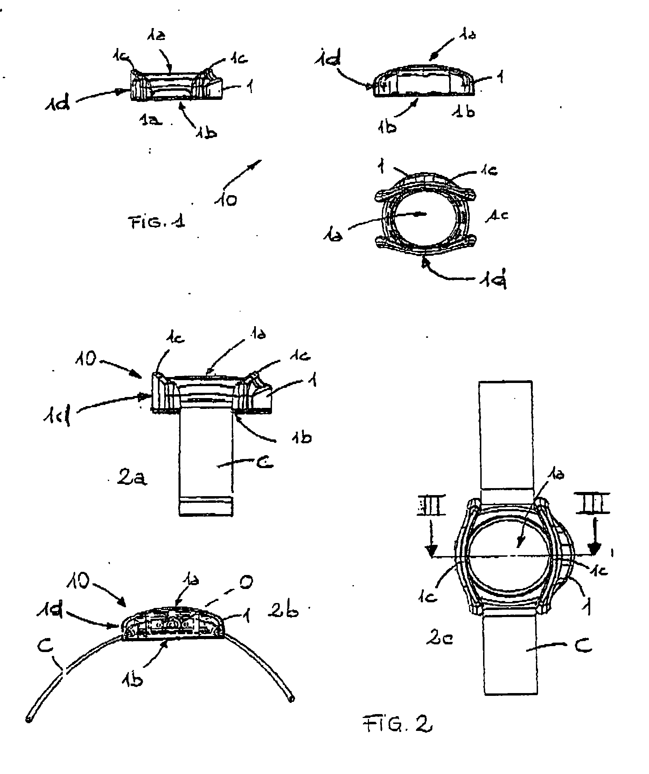

Figures 1 to 4 show a preferred embodiment in which the protective cover (10) comprises a case (1) made as a single piece and designed especially to protect watches and similar precision instruments. In Figure 1, the protective cover (10) is illustrated alone, whilst in Figures 2, 3 and 4, it is shown fitted to a watch (O).

In this embodiment, at least one portion (1a) of the surface of the case (1) is transparent so that the object it contains is visible from the outside. Two ribs (1c) protrude from the upper edge of the case (1) so that the transparent surface portion (1a) cannot be knocked against flat surfaces, thus protecting it too against shocks and scoring.

Depending on the type of object to be projected and the use to which the invention is to be put, the case (1) may comprise two more transparent surface portions (1a, 1b,..) so that the object it contains is visible in its entirety from the outside.

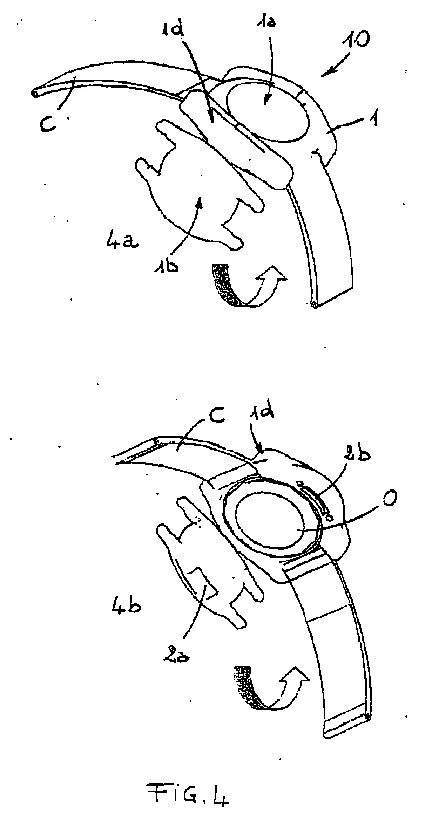

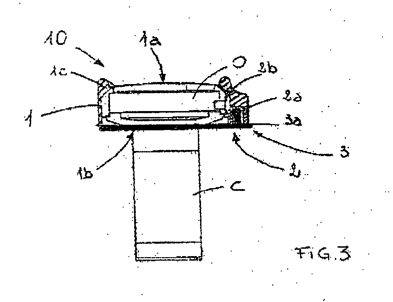

In the embodiment illustrated, the closing means (2) comprise stable and releasable fastening means (2a, 2b). More specifically, as shown especially in Figures 3 and 4b, the fastening means (2a, 2b) comprise a hook (2a) and a matching catch (2b) positioned at opposite ends of the case (1).

Figure 3 also shows means for releasing (3) the closing means (2) consisting of a protrusion (3a) that is locked to the fastening means (2a, 2b) and is able to release the fastening means (2a, 2b) by a manual movement.

The movement of the protrusion (3a), enabling the fastening means (2a, 2b) of the first embodiment to be released is possible because the protective cover (10) is made of a semirigid plastic material such as, for example, a derivative of polypropylene.

The invention is defined by the scope of the claims set out below.

## Claims

1. A protective cover for watches and precious objects, comprising an openable case (1) equipped with closing means (2) and comprising surface portions (1a,1b,1d) designed to cover the surface of the object, **characterized in that** the case (1) is made of a semi-rigid plastic material and of a single piece, said surface portions (1a,1b,1d) fully covering the surface of the object and protecting it against damage due to knocking and scratching.

2. The protective cover according to claim 1, **characterised in that** the case (1) comprises at least one transparent surface portion (1a) making the object inside visible from the outside.

3. The protective cover according to claim 2, **characterised in that** the case (1) comprises at least one rib (1c), protruding from its edge, so that the transparent surface portion (1a) cannot be knocked against flat surfaces.

4. The protective cover according to claim 1, **characterised in that** the case (1) comprises transparent surface portions (1a, 1b, ...) making the object inside fully visible from the outside.

5. The protective cover according to claim 1 or 2, **characterised in that** the closing means (2) comprise stable and releasable fastening means (2a, 2b).

6. The protective cover according to claim 5, **characterised in that** the fastening means (2a, 2b) comprise a hook (2a) and a matching catch (2b) positioned at opposite ends of the case (1).

7. The protective cover according to claim 1 or 5, **characterised in that** it comprises means for releasing (3) the closing means (2).

8. The protective cover according to claim 7, **characterised in that** the means for releasing (3) the closing means (2) comprise a protrusion (3a) that is locked to the fastening means (2a, 2b) and is able to release said fastening means (2a, 2b) by an appropriate movement.

9. The protective cover according to claim 1 or 2, **characterised in that** the closing means (2) comprise elastically deformable surface portions (2c), able to permit the insertion of the object to be protected.

## Patentansprüche

1. Eine schützende Abdeckung für Uhren und Schmuckgegenstände, die ein Gehäuse (1) umfasst, das sich öffnen lässt und das mit Mitteln zum Schließen (2) ausgestattet ist und Oberflächenanteile (1a, 1b, 1d) enthält, die so konzipiert sind, dass sie die Oberfläche des Gegenstands bedecken; **gekennzeichnet dadurch, dass** das Gehäuse (1) aus halbsteifem Kunststoff und aus einem einzigen Stück hergestellt ist, dass besagte Oberflächenanteile (1a, 1b, 1d) die Oberfläche des Gegenstands völlig bedecken und ihn vor Schäden durch Stöße und Kratzer schützen.

2. Die schützende Abdeckung nach Patentanspruch 1, **gekennzeichnet dadurch, dass** das Gehäuse (1) mindestens einen durchsichtigen Oberflächenanteil (1a) umfasst, so dass der Gegenstand darin von außen zu sehen ist.

3. Die schützende Abdeckung nach Patentanspruch 2, **gekennzeichnet dadurch, dass** das Gehäuse (1) mindestens eine Rippe (1c) umfasst, die über seinen Rand hinausragt, so dass der durchsichtige Oberflächenanteil (1a) nicht gegen flache Oberflächen stoßen kann.

4. Die schützende Abdeckung nach Patentanspruch 1, **gekennzeichnet dadurch, dass** das Gehäuse (1) durchsichtige Oberflächenanteile (1a, 1b, ...) umfasst, durch die der Gegenstand darin von außen komplett sichtbar ist.

5. Die schützende Abdeckung nach den Patentansprüchen 1 oder 2, **gekennzeichnet dadurch, dass** die Mittel zum Schließen (2) feste Befestigungsmittel und solche, die freigesetzt werden können (2a, 2b), umfasst.

6. Die schützende Abdeckung nach Patentanspruch 1, **gekennzeichnet dadurch, dass** die Befestigungsmittel (2a, 2b) einen Haken (2a) und einen passenden Riegel (2b) umfassen, die sich an gegenüberliegenden Enden des Gehäuses (1) befinden.

7. Die schützende Abdeckung nach den Patentansprüchen 1 oder 5, **gekennzeichnet dadurch, dass** sie Mittel zur Freigabe (3) der Mittel zum Schließen (2) umfasst.

8. Die schützende Abdeckung nach Patentanspruch 7, **gekennzeichnet dadurch, dass** die Mittel zur Freigabe (3) der Mittel zum Schließen (2) einen Vorsprung (3a) umfassen, der an den Befestigungsmitteln (2a, 2B) verriegelt ist und dazu imstande ist, besagte Befestigungsmittel (2a, 2b) durch eine entsprechende Bewegung freizugeben.

9. Die schützende Abdeckung nach den Patentansprüchen 1 oder 2, **gekennzeichnet dadurch, dass** die Mittel zum Schließen (2) elastisch verformbare Oberflächenanteile (2c) umfassen, die dazu imstande sind, das Einfügen des Gegenstands, der geschützt werden soll, zu erlauben.

## Revendications

1. Un couvercle de protection pour montres et bijoux, comprenant un boîtier ouvrable (1) muni de moyens de fermeture (2) et comprenant des portions de surface (1a, 1b, 1d) destinées à couvrir la surface de l'objet, **caractérisé en ce que** le boîtier (1) est réalisé dans une matière plastique semi-rigide et d'une seule pièce, lesdites portions de surface (1a, 1b, 1d) couvrant entièrement la surface de l'objet et le protégeant contre tout endommagement dû à un choc et des rayures.

2. Le couvercle de protection selon la revendication 1, **caractérisé en ce que** le boîtier (1) comprend au moins une portion de surface transparente (1a) qui rend l'objet à l'intérieur visible de l'extérieur.

3. Le couvercle de protection selon la revendication 2, **caractérisé en ce que** le boîtier (1) comprend au moins une nervure (1c), saillant de son bord, de manière à ce que la portion de surface transparente (1a) ne puisse pas être heurtée contre des surfaces plates.

4. Le couvercle de protection selon la revendication 1, **caractérisé en ce que** le boîtier (1) comprend des portions de surface transparentes (1a, 1b, ...) qui rendent l'objet à l'intérieur entièrement visible de l'extérieur.

5. Le couvercle de protection selon la revendication 1 ou 2, **caractérisé en ce que** les moyens de fermeture (2) comprennent des moyens de fixation (2a, 2b) stables et amovibles.

6. Le couvercle de protection selon la revendication 5, **caractérisé en ce que** les moyens de fixation (2a, 2b) comprennent un crochet (2a) et un fermoir de forme complémentaire (2b) situés à des extrémités opposées du boîtier (1).

7. Le couvercle de protection selon la revendication 1 ou 5, **caractérisé en ce qu'**il comprend des moyens (3) de déblocage des moyens de fermeture (2).

8. Le couvercle de protection selon la revendication 7, **caractérisé en ce que** les moyens (3) de déblocage des moyens de fermeture (2) comprennent une saillie (3a) qui est bloquée aux moyens de fixation (2a, 2b) et qui peut débloquer lesdits moyens de fixation (2a, 2b) par un mouvement approprié.

9. Le couvercle de protection selon la revendication 1 ou 2, **caractérisé en ce que** les moyens de fermeture (2) comprennent des portions de surface (2c), élastiquement déformables, destinées à permettre l'introduction de l'objet à protéger.
